# EUROPEAN PATENT APPLICATION

(11) **EP 4 245 116 A2**
(43) Date of publication of application: **20.09.2023**
(21) Application number: 23177535.4
(22) Date of filing: 06.06.2016
(51) Int. Cl.: A01D 34/82

(54) **HIGH-EFFICIENCY LAWN MAINTENANCE TOOL**

(30) Priority: 05.06.2015 US 201562171475 P; 21.04.2016 US 201662325490 P
(62) Divisional of application: 16729472.7
(71) Applicant: MTD Products Inc, Valley City, OH 44280-2711 (US)
(72) Inventor: SCHAEDLER, Axel, Olmsted Township, 44138 (US)
(74) Representative: SBD IPAdmin

(57) **Abstract**

A high-efficiency lawn maintenance tool (20) includes a frame (24) and a deck (28) attached to the frame (24). A handle (38) is connected to the frame (24) and/or the deck (28) and is configured to be engaged by an operator to move the high-efficiency lawn maintenance tool. A plurality of ground engaging members (26) are attached to the frame (24). A power source (34) is attached to one of the frame (24) and the deck (28). The power source (34) is connected to a drive shaft (36) that passes through the deck (28). A high-efficiency blade system (48) is attached to the drive shaft (36). The depth of the deck (28) is about the same as the depth of the high-efficiency blade system (48).

## Description

### CROSS-REFERENCE TO RELATED APPLICATIONS

This application claims the benefit of U.S. Provisional Application No. 62/171,475, filed June 5, 2015 and U.S. Provisional Application No. 62/325,490, filed April 21, 2016, the entire disclosures of which are hereby incorporated herein by reference.

### FIELD OF THE DISCLOSURE

The present disclosure is directed to a lawn maintenance tool configured to perform a grass cutting function utilizing a reduced amount of energy than a typical tool.

### BACKGROUND

Typical walk-behind lawn mowers and riding mowers utilize an engine or other power supply to rotate one or more mower blades. The mower blades are typically formed by stamping a thick metal sheet in order to form an elongated metal blade. These thick, heavy blades rotate at high speeds, which requires significant torque to maintain such high rotational speeds of the blade(s). As a result, large engines - typically in the form of a combustion engine - are attached to a mower deck or a mower frame, and these large engines are needed to produce the high torque requirements for rotating the heavy blades. The engines are often quite loud, requiring hearing protection during operation of the mowers.

### BRIEF SUMMARY

According to one aspect of the present disclosure, a high-efficiency lawn maintenance tool includes a frame and a deck attached to the frame. The high-efficiency lawn maintenance tool also includes a plurality of ground engaging members attached to the frame. The high-efficiency lawn maintenance tool further includes a power source attached to one of the frame and the deck, wherein the power source is connected to a drive shaft that passes through the deck. The high-efficiency lawn maintenance tool still further includes a high-efficiency blade system attached to the drive shaft. The high-efficiency lawn maintenance tool also includes a controller electrically connected to the power source, wherein the controller is configured to correlate the load and/or the mower groundspeed independent of an operator's control.

Advantages of the present disclosure will become more apparent to those skilled in the art from the following description of the embodiments of the disclosure which have been shown and described by way of illustration. As will be realized, the disclosed apparatus are capable of other and different embodiments, and their details are capable of modification in various respects.

### BRIEF DESCRIPTION OF SEVERAL VIEWS OF THE DRAWINGS

These and other features of the present disclosure, and their advantages, are illustrated specifically in embodiments of the disclosure now to be described, by way of example, with reference to the accompanying diagrammatic drawings, in which:
FIG. 1 is a perspective view of an example high-efficiency lawn maintenance tool according to at least one embodiment;
FIG. 2 is a perspective view of a high-efficiency blade system as used on the lawn maintenance tool of FIG. 1;
FIG. 3 is a side view of the high-efficiency lawn maintenance tool of FIG. 1;
FIG. 4 is a bottom view of the high-efficiency lawn maintenance tool of FIG. 1 showing a single blade system attached thereto;
FIG. 5 is similar to FIG. 4 showing multiple blade systems attached to the high-efficiency lawn maintenance tool;
FIG. 6 is a detail view of an example brush power and height adjustment mechanism for the high-efficiency lawn maintenance tool of FIG. 1;
FIG. 7 is a detail view of an alternate brush power mechanism for the high-efficiency lawn maintenance tool of FIG. 1;
FIG. 8 is a schematic view of an electric power circuit showing switches to break the circuit between a power source and a battery;
FIG. 9 is a perspective view of a battery charging system for the high-efficiency lawn maintenance tool of FIG. 1 for use on a floor; and
FIG. 10 is a perspective view of a battery charging system for the high-efficiency lawn maintenance tool of FIG. 1 for use on a wall.

It should be noted that all the drawings are diagrammatic and not drawn to scale. Relative dimensions and proportions of parts of these figures have been shown exaggerated or reduced in size for the sake of clarity and convenience in the drawings. The same reference numbers are generally used to refer to corresponding or similar features in the different embodiments. Accordingly, the drawing(s) and description are to be regarded as illustrative in nature and not as restrictive.

### DETAILED DESCRIPTION

For the purposes of this disclosure, the term low-energy is used interchangeably with the term "high-efficiency."

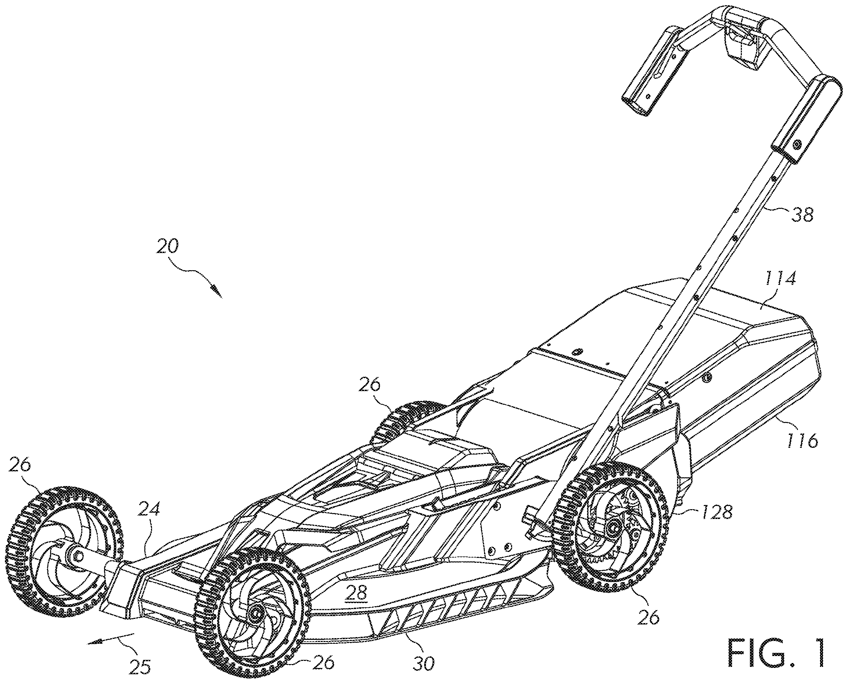

Referring to FIG. 1, an exemplary embodiment of a high-efficiency lawn maintenance tool 20 is shown. The lawn maintenance tool 20 is shown as being a walk-behind mower, but it should be understood by one having ordinary skill in the art that the high-efficiency lawn maintenance tool 20 may also be a riding mower, a stand-on mower, a robotic mower, a manual-powered mower, or any other tool configured to mow a lawn. The high-efficiency lawn maintenance tool 20 can include a frame 24. In one example, the frame 24 provides a skeletal support for many if not all of the remainder of the components that make up the high-efficiency lawn maintenance tool 20. This feature eliminates the need for a typical "deep draw" deck of stamped metal that can often be heavy and relatively expensive to manufacture due to strength and durability requirements to support the remainder of the mower parts. The frame 24 can comprise a metal structure or any other material suited for the strength and durability requirements of the frame 24. In an example, the frame 28 can be constructed of tubular metal components arranged in a "U"-shape and oriented such that the open portion of the U is facing the forward direction (represented by arrow 25) of the high-efficiency lawn maintenance tool 20.

The high-efficiency lawn maintenance tool 20 includes ground engaging members 26 attached to the frame 24. Any suitable ground engaging member 26 can be used with the described lawn maintenance tool 20 including, but not limited to, pneumatic tires, non-pneumatic tires/wheels, track assemblies, and wheels with built-in suspension features. As shown in FIG. 1, the ground engaging members 26 can be wheels with suspension features similar to or the same as the wheels described in U.S. Patent Application Serial No. 14/751,782. In another example, the wheels can be attached to the frame 24 with a snap-on feature that does not require tools, such as hand tools.

The high-efficiency lawn maintenance tool 20 includes a deck 28. The deck 28 can include various parts including a deck shell 30. Use of the below described mower blade assembly enables the deck shell 30 and the deck 28 to be of relatively short vertical height when compared to many known walk-behind mower decks. This lessened height requirement, or "low profile" deck, can provide benefits such as minimized storage volume requirements, minimized shipping volume requirements and the like. The deck shell 30 can be constructed of any suitable material.

The high-efficiency lawn maintenance tool 20 includes a power source 34 configured to provide rotational power to a cutting blade system. In the illustrated embodiment, the power source 34 is a battery-powered electric motor, but it should be understood by one having ordinary skill in the art that the power source 34 may also be an internal combustion engine, a hybrid-electric motor, or any other power source capable of providing a rotational power output. The power source 34 is mounted to one of or both the frame 24 and the deck 28, and the power source 34 includes a drive shaft 36 extending through the frame 24 and the deck 28.

The illustrated exemplary embodiment of high-efficiency lawn maintenance tool 20 includes a user-operated handle 38 connected to the frame 24 and/or the deck 28. In one example, the collapsible handle is "U"-shaped, with the ends of the U being mounted to the handle mounts and the closed portion of the U serving as a handle for an operator to push or otherwise control the high-efficiency lawn maintenance tool 20. The collapsible handle can include any number of ergonomic designs to ease operator interaction. In another example, the handle 38 can comprise a "J"-shape that connects to the frame 24 on only one side. Of course, other shapes of handle 38 are also contemplated.

In one example, the collapsible handle 38 can be rotated at the handle mounts to facilitate folding the collapsible handle 38. Furthermore, the collapsible handle 38 can include a hinged portion at approximately one-half of the length of the collapsible handle 38 such that the collapsible handle 38 can be folded onto itself and lie flat on the deck 28 and/or the frame 24.

In another example, the collapsible handle 38 can also be attached to a damping cylinder. The damping cylinder can, when actuated, raise a portion of the collapsible handle 38 at a controlled rate from a collapsed position to an extended position. The damping cylinder can be mounted to the collapsible handle 38 and to the frame 24.

The combination of the low-profile deck 28 previously described and the collapsible handle 38 enable reduced shipping volume requirements compared to typical walk-behind mowers. In one example, the walk behind mower embodiment of the high-efficiency lawn maintenance tool 20 can be shipped in a box having less than one-half of the height of a typical walk-behind mower. In a more particular example, the shipping box height can be between one-half and one-third the height of a typical walk-behind mower. In yet another example, the shipping box may be described as having dimensions approximating the dimensional proportions of a pizza box, that is, the height of the shipping box is significantly less than the length or width of the shipping box.

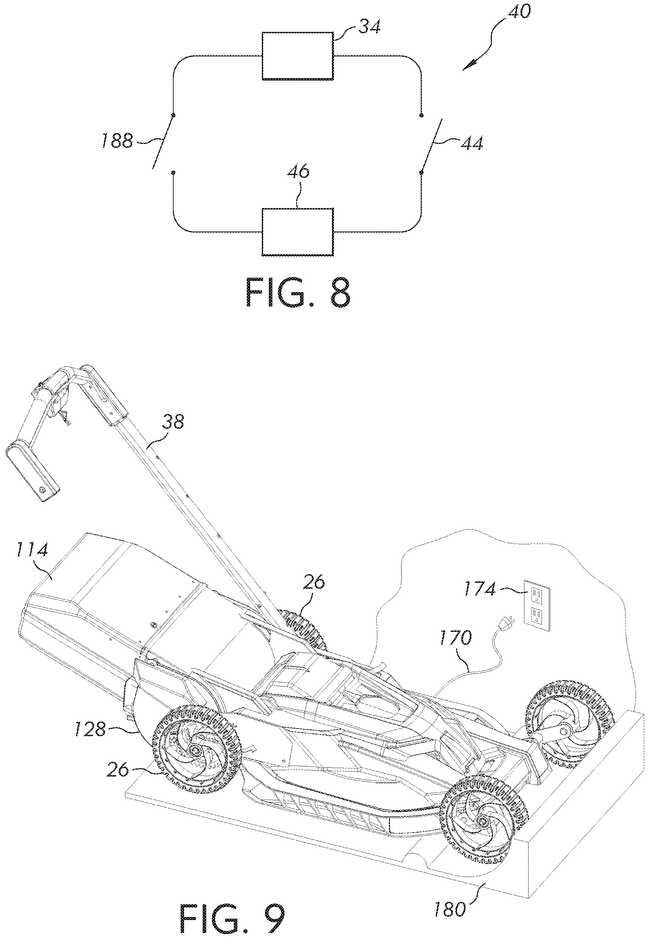

The handle 38 can be folded toward the frame 24 for storage and/or shipping purposes. Turning to FIG. 8, a simple electrical circuit 40 can be included to prevent operation of the power source 34 when the handle 38 is in a folded position and is not in a suitable position for operation of the lawn maintenance tool 20. For example, the electrical circuit 40 can include a switch 44 that breaks the electrical connection between the power source 34 and a set of batteries 46. When the electrical connection is broken, the lawn maintenance tool 20 cannot be operated. As such, the switch 44 can be configured to complete the circuit (i.e., enable mower operation) when the handle 38 is in one position or a number of positions that are suitable for mower operation. However, if the handle 38 is outside of the selected position(s), the broken electrical connection will prohibit mower operation, such as when the handle 38 is in the folded position for storage or shipping.

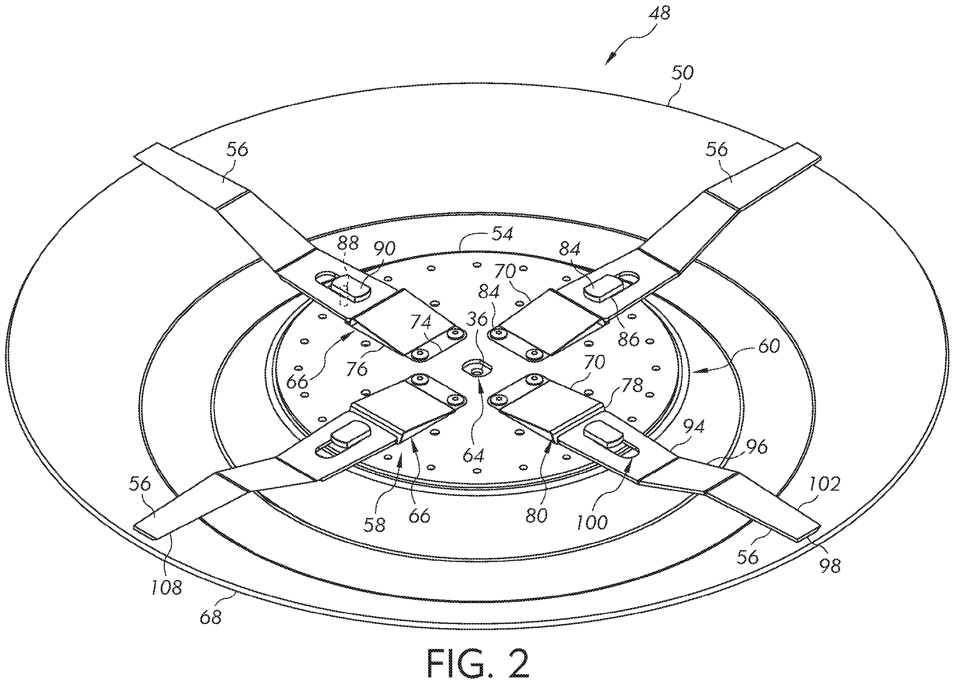

As shown in FIG. 2, an exemplary embodiment of a high-efficiency blade system 48 includes a shell 50, a mounting plate 54, a plurality of cutting blades 56, and a plurality of quick-attach mechanisms 58 that allow the cutting blades 56 to be easily removably attached to the mounting plate 54. The blade system 48 is configured to be easily removable and attachable to the high-efficiency lawn maintenance tool 20, and the cutting blades 56 are similarly easily removable and attachable to the blade system 48.

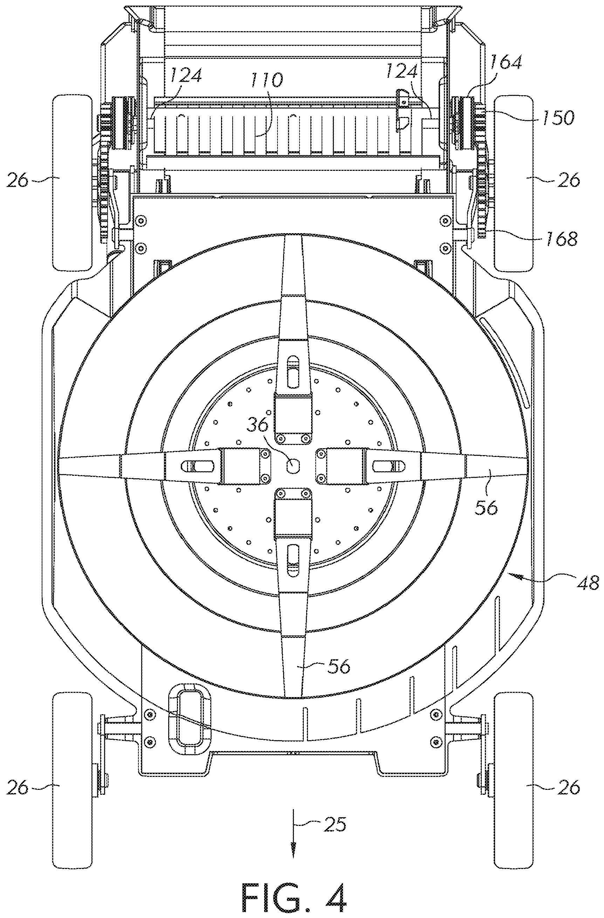

The shell 50 is a generally flexible or semi-rigid member that forms a physical barrier between the deck 28 and the cutting blades 56 as well as the cut grass, as shown in FIGS. 2 and 4. In another embodiment, the shell 50 is formed as a rigid member. The shell 50 is configured to be rotatably driven by the drive shaft 36 extending from the power source 34. The shell 50 is also configured to direct cut grass downwardly toward the ground. The shell 50 is generally formed as an inverted bowl shape having a somewhat W-shaped configuration, when viewed in the cross-section, wherein the central portion 60 of the shell 50 extends downwardly into the space within the shell 50. When installed on the high-efficiency lawn maintenance tool 20, the open side of the bowl-shaped shell 50 is directed downwardly toward the ground. The drive shaft 36 that extends downwardly from the power source 34 extends through a central aperture 64 of the shell 50. In the illustrated exemplary embodiment, the shell 50 includes four (4) slots 66 that are equally spaced about the central aperture 64. The slots 66 are oriented in a tangential manner relative to a radial edge 68 of the shell 50, and the slots 66 are positioned about ninety degrees (90°) relative to each other relative to the central aperture 64. The slots 66 are configured to receive a portion of the biasing member of the quick-attach mechanism 58, as explained below. The slots 66 are positioned on the central portion 60 of the shell 50.

As shown in FIGS. 2 and 4, the mounting plate 54 includes a plurality of quick-attach mechanisms 58 that allow for an easy and fast manner for attaching and detaching the cutting blades 56 from the mounting plate 54. The quick-attach mechanisms 58 work in conjunction with a connecting aperture as well as the size and shape of the cutting blades 56 to provide for a tool-less connection between the cutting blades 56 and the mounting plate 54, wherein a tool such as a wrench, screwdriver, or any other handheld tool is not necessary to attach or disconnect the cutting blades 56. In an embodiment, each quick-attach mechanism 58 includes a biasing member 70 operatively connected to the mounting plate 54. The biasing member 70 is configured to bias the cutting blades 56 into being positively attached to the mounting plate 54 when properly attached thereto or, alternatively, to bias the cutting blades 56 away from the mounting plate 54 such that the cutting blades 56 cannot be attached to the mounting plate 54 if the cutting blades 56 are not properly aligned or are not properly connected.

The biasing member 70 is configured as a generally L-shaped spring, as shown in FIG. 2. In an embodiment, the biasing member 70 is metal, but it should be understood by one having ordinary skill in the art that the biasing member 70 may also be formed of plastic or other flexible material that allows the biasing member 70 to act as a spring. The biasing member 70 includes a base 74, a body 76 extending from the base 74, a curved portion 78, and a bearing portion 80. The base 74 of the biasing member 70 is configured as a substantially flat component and is configured to receive an attachment mechanism 84 for connecting the biasing member 70 to the mounting plate 54. The attachment mechanism 84 can be a nut-and-bolt, rivet, or similar mechanical fastener sufficient to connect the biasing member 70 to the mounting plate 54.

The biasing member 70 is attached to the mounting plate 54 in a cantilevered manner, wherein the distal end of the biasing member 70 - defined by the base 74 - is attached to the mounting plate 54 and the remainder of the biasing member 70 extends therefrom. The illustrated embodiment shows the base 74 as having two (2) attachment mechanisms 84 for attachment to the mounting plate 54, but it should be understood by one having ordinary skill in the art that the mounting plate 54 may include any number of attachment mechanisms 58. The base 74 is attached to the surface of the mounting plate 54 and extends through a corresponding opening of the mounting plate 54 such that the body 76, curved portion 78, and bearing portion 80 are generally positioned below a downward facing lower surface of the mounting plate 54.

The body 76 of the biasing member 70 of each quick-attach mechanism 58 extends from the base 74 at an angle, as shown in FIG. 2. The body 76 is a generally flat component that is integrally connected with the base 74. It is the angle formed between the base 74 and the body 76 that provides the spring action when the biasing member 70 is actuated. The body 76 extends downwardly (directionally, when the blade system 12 is attached to the lawn maintenance tool 20) below the downward facing lower surface of the mounting plate 54. One distal end of the body 76 is integrally formed with the base 74, and the opposing distal end of the body 76 is integrally formed with the curved portion 78. The curved portion 78 extends from the body 76 in a curved manner, wherein the curved portion 78 is curved upwardly toward the downward facing lower surface 86 of the mounting plate 54. The curved portion 78 connects the body 76 and the bearing portion 80, wherein the bearing portion 80 extends from the curved portion 78 at an angle relative to the body 76. While the body 76 of the biasing member 70 extends away from the downward facing lower surface 86 of the mounting plate 54, the bearing portion 80 extends toward (and beyond) the lower surface 86 of the mounting plate 54. The bearing portion 80 is configured to move into and out of the corresponding slot 66 during actuation of the biasing member 70, as will be explained below. When actuated, the biasing member 70 rotates about the transition between the body 76 and the base 74 such that the bearing portion 80 moves toward the shell 50. The bearing portion 80 includes a bearing surface 88 that is configured to contact the cutting blade 56 and bias the spring either into engagement when properly aligned during attachment or into disengagement when not properly aligned during attachment.

In an embodiment, a cap 86 of the quick-attach mechanism 84 extends downwardly from the downward facing lower surface of the mounting plate 54, as shown in FIG. 2. Each cap 86 includes a post 88 and a plate 90, wherein the post 88 is attached to the mounting plate 54 and the plate 90 is attached to the opposing distal end of the post 88. The post 88 is a generally cylindrical member that is integrally formed with the mounting plate 54. In an embodiment, the post 88 is attached to the mounting plate 54 by way of a weld or other means for permanently attaching the post 88 to the mounting plate 54. The plate 90 is oriented generally parallel to downward facing lower surface of the mounting plate 54. The plate 90 is a generally oval-shaped member. Each cap 86 is configured to allow a cutting blade 56 to be releasably attachable thereto. The plate 90 is spaced apart from the mounting plate 54 a distance that is substantially the same as the thickness of the cutting blade 56 - or just slightly larger - to reduce or eliminate shaking movement of the cutting blade 56 relative to the mounting plate 54. The plate 90 is sized and shaped to be received by the cutting blade 56.

As shown in FIG. 2, an exemplary embodiment of a cutting blade 56 is a generally elongated Z-shaped blade having a mounting portion 94, a transition portion 96, and a tip portion 98. The mounting portion 94 is formed as a flat portion having an aperture 100 formed therethrough. The aperture 100 is formed as an elongated oval shape, wherein the aperture 100 is shaped to correspond to the shape of the plate 90 of the cap 86. The transition portion 96 extends from the mounting portion 94 at an angle therefrom, wherein the transition portion 96 extends away from the downward facing lower surface of the shell 50. The tip portion 98 extends from the transition portion 96 at an angle thereto, wherein the tip portion 98 and the mounting portion 94 are substantially parallel relative to each other. The cutting blade 56 includes a sharpened leading edge 102 configure to cut grass as the blade system 48 is rotated. When the cutting blades 56 are properly installed on the blade system 48, the distal end of the tip portion 98 is positioned adjacent to the radial edge 68 of the shell 50. In an embodiment, the distal end of the tip portion 98 is positioned radially inward relative to the radial edge 68 of the shell 50.

In operation, the cutting blades 56 are operatively connected to the blade system 48 by way of the quick-attach mechanism 58. The cutting blade 56 is first positioned adjacent to the cap 86 of the quick-attach mechanism 58 such that the aperture 100 of the cutting blade is aligned with the cap 86. The cutting blade 56 is then pushed toward the mounting plate 54, wherein the cap 86 of the quick-attach mechanism 58 is received in the aperture 100 of the cutting blade 56. Further, the mounting portion 94 of the cutting blade 56 contacts the body 76 and curved portion 78 of the biasing member 70, and as the cutting blade 56 is moved toward the mounting plate 54, the biasing member 70 is actuated by bending and rotating in a cantilevered manner. If the cutting blade 56 is not fully attached to the cap 86, the biasing member 70 biases the cutting blade 56 away from the mounting plate 54 such that the cutting blade 56 is disengaged from the cap 86. As the biasing member 70 is actuated, the bearing portion 80 extends through the corresponding slot 66 of the shell 50. Once the cutting blade 56 has been pushed until it is flush with the mounting plate 54, the cutting blade 56 is then pulled radially toward the radial edge 68 of the shell 50 until the post 88 of the cap 86 contacts the end of the elongated aperture 100 formed through the cutting blade 56. As the cutting blade 56 slides radially outward, the mounting portion 94 of the cutting blade 56 slides along the body 76 and curved portion 78 of the biasing member 70 after which the distal end of the cutting blade 56 slides along the bearing surface (downward facing surface) of the bearing portion 80. In this position, the cutting blade 56 is positively attached to the quick-attach mechanism 58 extending from the mounting plate 54, and the spring bias generated at the curved portion 78 of the biasing member 70 continually pushes radially against the edge at distal end of the cutting blade 56. This radial bias from the biasing surface against the cutting blade 56 ensures continuous attachment between the cutting blade 56 and the mounting plate 54. This radial bias also prevents accidental disconnection of the cutting blade 56 by preventing the cutting blade from 56 sliding radially toward the central aperture 64 of the mounting plate 54. The mounting portion 94 of the cutting blade 56 is sandwiched between a portion of the cap 86 and the mounting plate 54 to reduce or eliminate any "bounce" at the distal end of the tip portion 98.

The cutting blade 56 is removed by actuating - or pressing - the biasing member 70 toward the mounting plate 54, thereby removing the radial bearing force applied to the cutting blade 56 and effectively disengaging the cutting blade 56 from the biasing member 70. The cutting blade 56 is then slid radially inward toward the central aperture 64 of the mounting plate 54 until the entire plate 90 of the cap 86 is aligned with the aperture 100 of the cutting blade 56. At this point, the cutting blade 56 can be removed from the quick-attach mechanism 58.

As noted previously, the quick-attach mechanism 58 allows the cutting blades 56 to be releasably attachable to the mounting plate 54 without the use of any handheld tools or other tool separate from the blade system 48.

The described high-efficiency blade system 48 is further described in U.S. Patent Application having Serial No. 62/325,159 and related applications. It is to be understood that other, similar systems can also be used such as the blade system in described in U.S. Patent Application having Serial No. 15/166,378 and related applications.

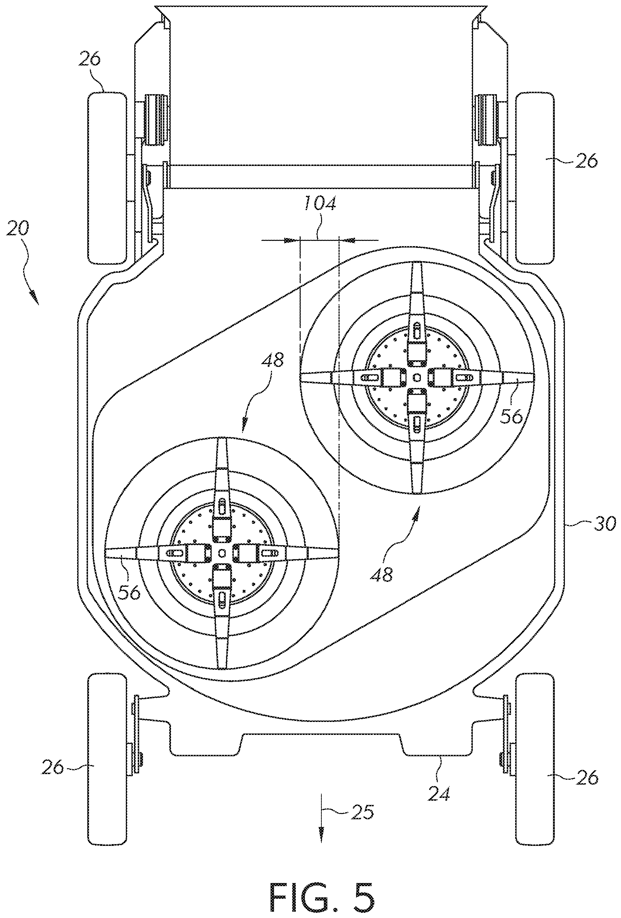

It is to be understood that the design of the high-efficiency blade system 48 can be scalable to larger or smaller needs. For example, a larger walk-behind mower may require a larger blade system 48, or even a plurality of smaller blade assemblies 48, as shown in FIG. 5. As shown, the plurality of smaller blade assemblies 48 can include a cutting path overlap 104 such that two blade systems 48 pass over a portion of grass to be cut. This helps reduce and/or eliminate the chance of uncut grass remaining after the high-efficiency lawn maintenance tool passes over uncut grass. While FIG. 5 shows two (2) blade systems 48, some lawn maintenance devices may utilize three (3) or more blade systems 48. In other examples, the high-efficiency lawn maintenance tool 20 can include multiple decks

When scaling the design for larger or smaller blade systems 48, a mathematical relationship between the optimal number of blades and the diameter of the blade system 48 can be calculated. The mathematical relationship can include a minimum often (10) blade passes per foot at a minimum. This relationship may also place a maximum 19,000 feet per minute (fpm) cutting blade tip speed on the blade system 48. In one example, a desired cutting blade speed 56 can be about 10,000 fpm. In another example, the high-efficiency blade assembly 48 can operate at about 2,200 rpm with a projected 12,000 foot per minute (fpm) blade tip speed. This is a significant reduction from a standard 21-inch diameter system that may operate at 3,200 rpm and have a 19,000 fpm blade tip speed.

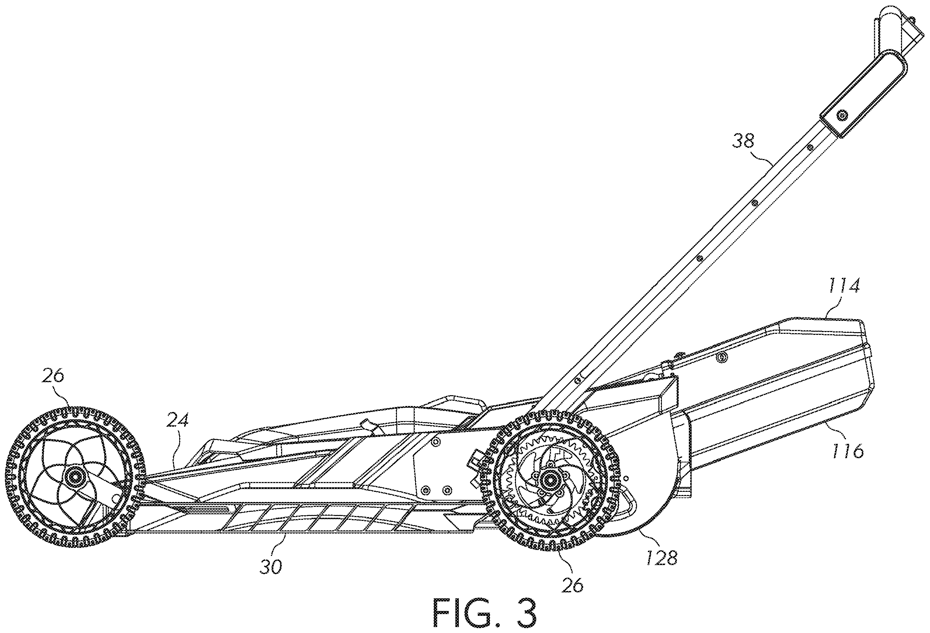

In the shown examples of FIGS. 1 and 3, the deck 28 does not include a chute, such that there is no exit port from which cut grass clippings are expelled from the lower volume, which is defined by the lower surface of the deck 28. The high efficiency blade system 48 of the low-energy lawn maintenance tool 20 is configured to cut the grass with the cutting blades 56 and the grass cuttings are then directed downwardly back toward the ground, as explained above. As such, there is little or no grass clippings swirling around within the lower volume that need to be expelled from a chute. In another example, the deck 28 is formed as a low-profile deck such that the depth of the deck 28 is about the same depth as the high-efficiency blade system 48. Typical mower decks of a walk-behind mower requires a depth that is significantly greater than the thickness of the blade 56 in order to allow circulation of the grass clippings within the lower volume below the deck 28 until they are expelled radially outward through a chute. However, because the grass clippings created by the high-efficiency blade system 48 are directed downwardly toward the ground and not circulated underneath the deck 28, there is no need for additional depth of the deck 28. It should be understood by one having ordinary skill in the art that the deck 28 can be formed as a substantially flat deck having sufficient depth or space between the cutting blades 56 and the edge of the deck 28 to comply with safety standards for mower decks and blades.

In another example of the walk-behind mower, the lawn maintenance tool 20 can include a trailing shield for several purposes. One such purpose is to prevent undesirable debris from being propelled toward the operator. Another purpose is to urge grass clippings to lie flat as the trailing shield passes over the grass clippings. Yet another purpose is to "comb" the grass clippings and the uncut grass as the trailing shield passes over them. In this example, the trailing shield can include a number of teeth or channels that can comb the grass.

In one example, the high-efficiency lawn maintenance tool 20 includes a brush 110 (best seen in the underside view of FIG. 4) attached to either the leading edge or the trailing edge of the deck 28. In another example, the brush 110 is attached to both the leading and trailing edges of the deck 28. In one example, the brush 110 is attached to the leading edge of the deck 28 and includes a plurality of finger-like projections extending downwardly from the edge of the deck 28.

As shown in FIGS. 1, 3, and 9, in yet another example of the high-efficiency lawn maintenance tool 20 can include a grass clipping bagging attachment 114. The brush 110 can be configured to rotate and "sweep" the grass clippings into the bagging attachment 114 for collection. The grass clipping bagging attachment 114 can include any suitable configuration such as a generally cylindrical exterior case, a flexible, fabric bag, or as shown as a case 128 defining a rectangular volume within. The grass clipping bagging attachment 114 can be supported and attached to the lawn maintenance tool 20 using any suitable structure.

One example bagging attachment 114 is supported on both sides by a brace 118. A rear end of the brace 118 can be attached at the rear of the bagging attachment 114, while a front end of the brace 118 extends past the front of the bagging attachment 114. The front end of the brace 118 includes structure configured to attach the brace 118 to corresponding structure on the collapsible handle 38 or some other portion of the frame 24 and/or deck 28.

The brace 118 defines an aperture 120 somewhere between the rear end and the front end of the brace 118. A shaft 124 passes through the apertures of the brace 118 on each side of the bagging attachment 114. The terminal ends of the shaft 124 include rollers 126 which rest on the ground engaging members 26 at the rear of the lawn maintenance tool 20. When the lawn maintenance tool 20 traverses along a driven surface (e.g., a yard), the ground engaging members 26, through friction, urge the rollers 126 and the shaft 124 to rotate. The brush 110 or a similar structure is attached to the shaft 124 and is located generally within a case 128. As the walk-behind mower moves along, the ground engaging members 26 rotate, which in turn rotates the rollers 126 and the shaft 124, which rotates the brush 110. The rotating brush 110 urges grass clippings lying on the driven surface to elevate and be placed into the bagging attachment 114 behind the case 128. In one example, the bagging attachment 114 can be a drawstring bag designed to attach to the case 128 and collect grass clippings. As the bag becomes full, the operator can remove the drawstring bag from the case 322 and simply pull the string to close the bag. It is to be understood that the grass clipping bagging attachment 114 is not necessarily present in order to use the high-efficiency lawn maintenance tool 20, but may be attached and removed as the operator sees fit.

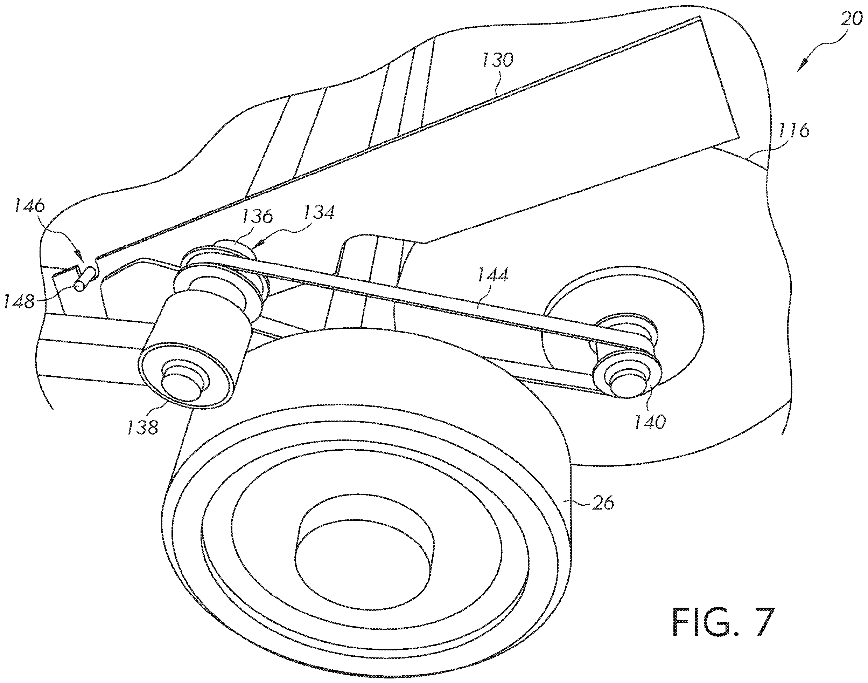

In another example of the high-efficiency lawn maintenance tool 20, such as a walk-behind mower equipped with a sweeper for collection of grass clippings, another attachment system can be used. Turning to FIG. 7, an alternate attachment system is shown including a support arm 130 including an aperture 134 for an axle 136. The support arm 130 can include mounting locations for the case 128 of the sweeper brush 110 (shown in previous figures). In one example, threaded fasteners are used to mount the case 128 to the support arm 130, however, any suitable attachment means are satisfactory. The axle 136 can include an end-mounted bearing 138 that rests upon the ground engaging member 26 (e.g., wheel) such that when the ground engaging member 26 rotates as it rolls along a surface, the bearing 138 also rotates. The bearing 138 is connected to a driveable member 140 such as a gear that enables a belt connection 144 to the shaft 124 that holds the sweeper brush 110. As such, rotation of the mower wheel rotates the bearing 138 which then rotates the driveable member 140 to rotate the belt 144 which then rotates the sweeper brush 110. The sweeper brush 110 can be configured to propel grass clippings into the bagging attachment 114 configured to hold grass clippings for removal at another place and/or time. While FIG. 7 shows only one side of the sweeper attachment system, it is to be understood that the opposite side of the mower can include the same or similar components.

Continuing with FIG. 7, the support arm 130 can define a notch 146 at the end closest to the lawn mower deck 28. In the shown example, the notch 146 faces generally upward such that the open end of the notch 146 is on the top side of the support arm 130. In this configuration, the attachment system for the sweeper can be mounted to the high-efficiency walk-behind mower as follows: 1. The assembly is inserted diagonally downward and toward the front of the high-efficiency walk-behind mower until the notch 146 on the support arm 130 is below an appendage 148 on the frame 24 of the mower. The appendage 148 can be a peg, a screw, tab, etc. 2. The bearings 138 are then lowered onto the ground engaging members 26. 3. The cantilevered weight of the case 128 and the sweeper brush 110 will then rotate the support arms 130 such that the notch 146 engages the appendage 148. The weight of the case 128 and the sweeper brush 110 will tend to hold the assembly in place until acted on by an outside force to remove the assembly.

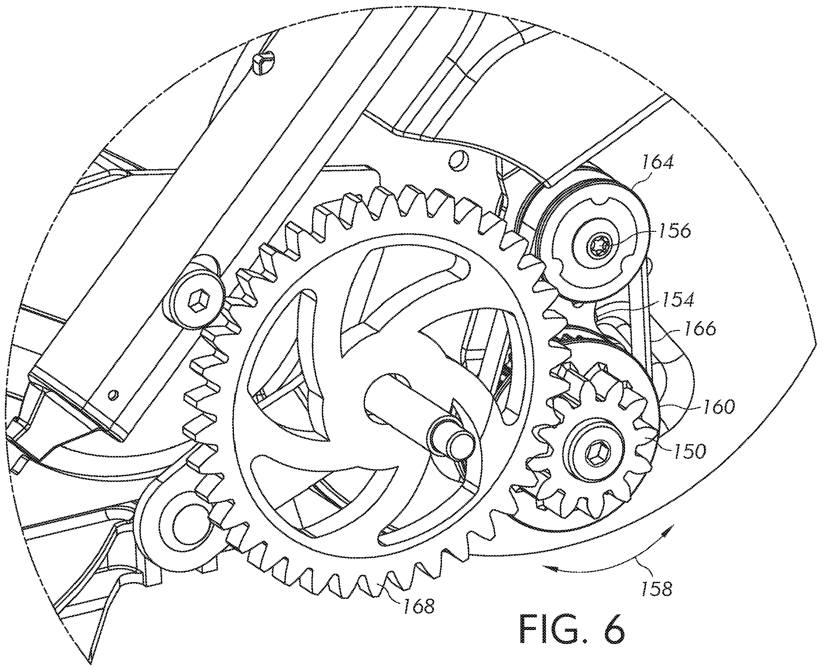

Yet another sweeper mounting arrangement is shown in FIG. 6. For the sweeper to work optimally, the tips of the strands of the sweeper brush 110 should always be at or near the elevation level of the cutting blades 56. If the strands are too low, it takes too much force to push the brush 110 through the uncut grass. If the strands are too high, the brush 110 does not sweep up the clippings toward the batting attachment 114. For this reason, the sweeper is fixed to the frame 24 and/or deck 28 so the relationship between the brush 110 and the blades 56 is fixed as described below.

The sweeper is easily driven by attaching a gear to the wheel shaft, with a mating gear on the sweeper. This rotates the sweeper in the proper direction for best function. Unfortunately, since the wheels move up and down in relation to the deck to accommodate different cutting heights, the deck drive must also be able to accommodate that motion.

To solve this problem, the sweeper gear 150 is mounted on the end of a pivot arm 154 which is spring loaded to assure gear engagement. The pivot point 156 of the pivot arm 154 is coincident with the sweeper shaft 124, enabling rotation about the sweeper shaft 124 in directions represented by arrow 158. The sweeper gear 150 also has a cogged belt sprocket 160. This cogged belt sprocket 160 is matched by a sprocket 164 on the sweeper shaft 124. Related and proportional motion between the sprockets 160, 164 is accomplished via a cogged belt 166.

In this configuration, when the mower 20 is pushed (or driven) a rear wheel gear 168 attached to a rear wheel shaft drives the sweeper gear 150 which in turn drives the sweeper shaft 124 via the sprockets 160, 164.

A problem arises when performing a common pivot turn on the inside wheel with the mower. If the sweeper drive is on the inside wheel (which does not rotate in a pivot turn), the sweeper stops functioning in a pivot turn. To address this, another drive system (the mirror of the first) is attached to the opposite side of the sweeper shaft 124 which likewise engages an identical gear on the other rear wheel of the mower 20. This is best seen in FIG. 4.

In one example, the sprockets 164 on the sweeper shaft 124 are equipped with a one-way clutch or bearing. This allows either sprocket 164 to engage the shaft 124 when the mower is moving forward. But when one sprocket 164 slows down (as in a turn) or reverses, it no longer engages the shaft 124 and spins freely. As such, the outside and faster wheel will always determine the speed of the sweeper brush 110.

In the shown example, the one-way bearing/clutch is accomplished with a sliding pin/internal cam design used on the drive system of some known front wheel drive mowers.

In another example, the brush 110 can be powered by the power source 34 located on the deck 28. Furthermore, structure for taking power from the power source 34 and rotating the brush 110 can be an after-market feature sold as a snap-in place upgrade.

In another example, the walk-behind mower example of the lawn maintenance tool 20 can be self-propelled by using the power source 34 located on the deck 28. In yet another example, the self-propelled feature can be an after-market kit. The after-market kit can include the structure necessary to add the self-propelled feature, higher capacity batteries (for battery-powered lawn maintenance tools 20), and a controller. The controller can include software that senses the load on the drive shaft 36 and then adjusts the ground speed of the walk-behind mower to optimize the cut of the grass. In one example, the grass clipping bagging attachment 114 can be included in the kit as well.

The self-propelled lawn mower example can use either a differential or a straight drive system. At least one of the ground engaging members 26 or its associated structure can include a one-way drive, or over-running clutch.

In another embodiment, the high-efficiency maintenance tool 20 comprises a handheld implement such as a typical string trimmer. In this example, a guard can be placed around the exterior of a trimmer shell such that the cutting blades 56 cannot contact a relatively strong stationary object such as a fence post, tree trunk, building foundation, etc. while trimming grass.

For the high-efficiency lawn maintenance tools described, the battery-operated versions can be charged in various ways. In particular, the walk-behind lawn mower high-efficiency lawn maintenance tools 20 will be discussed. In one example, the rechargeable batteries 46 can be simply removed from their docking stations on the deck 28 and charged at a location convenient to the operator. In another example, a power cord 170 can be provided to be plugged into a typical wall outlet 174 for 110-volt or other standard electrical supply in order to charge the battery(ies). The other end of the power cord 170 can be plugged into a charging receptacle on the high-efficiency lawn maintenance tool 20.

As shown in FIG. 9, a charging station such as a mat 180 can be used to charge the batteries 46 of the walk-behind mower. When the walk-behind mower is placed onto the mat 180, a charging operation begins and re-charges the batteries 46 as they remain on the deck 28. The mat 180 can obtain standard electrical power from a typical wall outlet 174. This charging station option can also be used for the low-energy maintenance tool 20 comprising a rider mower.

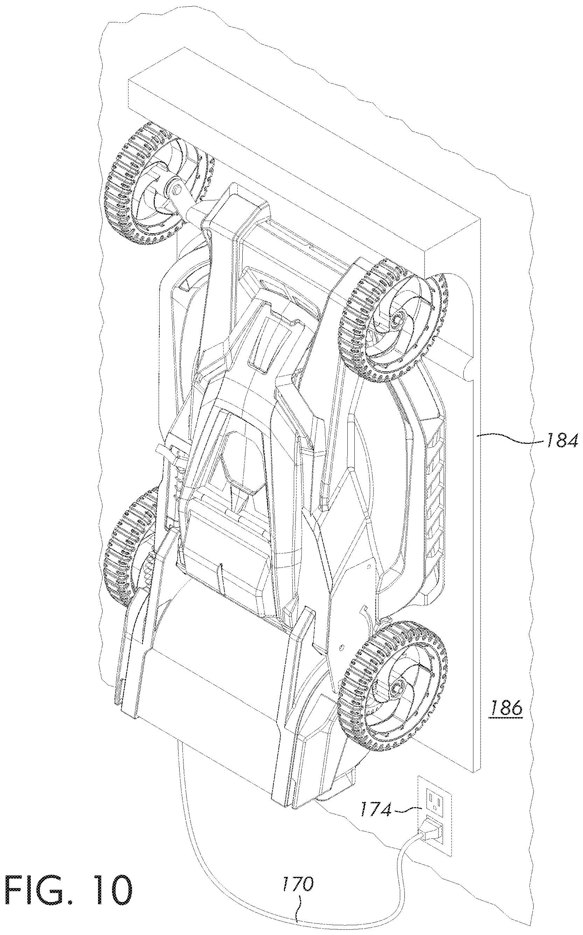

As shown in FIG. 10, a hook, hanger, or wall mount 184 for the walk-behind mower can also include an integrated battery charger to serve as a charging station. When the walk-behind mower is placed onto the wall mount 184, a charging operation begins and re-charges the batteries as they remain on the deck 28. The wall mount 184 can obtain standard electrical power from a typical wall outlet 174. FIG. 10 shows the walk-behind mower with the collapsible handle folded to the deck. In some examples, the wall mount 184 can be the same structure as the mat 180, just mounted to a vertical surface 186. This charging station option can also be used for the high-efficiency maintenance tool 20 comprising a walk-behind mower or a trimmer.

Returning to FIG. 8, it is sometimes beneficial to electrically isolate the battery(ies) 46 from the electric motor power source 34 on the high efficiency lawn maintenance tool 20. For example, in both the mat 180 and wall mount 184 charging operations, the charging operation opens a switch 188 in the electrical path between the motor and the battery 46 such that the motor (and hence the blade system 48) cannot be operated during the charging procedure. As discussed previously, the collapsible handle 38 can also open the switch 44 to interrupt the electrical supply to the motor. In this way, when an operator is lowering the handle, hanging the walk-behind mower, etc., the blade system 48 cannot be powered by the power source 34 (e.g., electric motor).

In a separate example, it may be beneficial to require the operator to remove the rechargeable batteries 46 from the mower frame 24 and/or deck 28 prior to folding the collapsible handle 38 onto the deck 28.

The described apparatus can have numerous benefits. The blade system 48 can be significantly quieter than typical mower blades when in operation. In some instances, it may be desirable to add a feature to the high-efficiency lawn maintenance tools 20 to alert the operator that the tool 20 is in operation and the blade system 48 may be rotating. Some examples of alerts can include lights, physical movement of an additional structure, or creation of an artificial sound.

The high-efficiency walk-behind lawn mower described herein enables a relatively low-weight mower and shipping box combination that enables shipping by typical standard carriers such as UPS, FedEx, etc. without incurring additional charges based upon weight overages. The same can be said of the dimensions of the high efficiency walk-behind lawn mower; it enables shipping via standard carriers without incurring additional charges based upon total dimensional overages.

The high-efficiency lawn maintenance tool 20 also has a relatively high efficiency thereby enabling: increased run-time of the battery, lower cost to operate, or both.

The described apparatus further enables a high-efficiency method of collecting the grass clippings via rotating brush. Another feature of the disclosure is the skeletal frame of the high-efficiency walk behind lawn mower from which all other features are attached. In contrast, many existing walk-behind mowers have a stamped metal or formed plastic deck that is used as the frame of the lawn care device.

As described above, the individual grass cutting blades on the blade system 48 can be considered quick-change, or tool-less for installation and removal. Furthermore, the wheels of the mower can be "fast attach" wheels that can be removed for shipping. In another example, the wheels remain on the frame 24 for shipping, and serve as weight bearing structure within a shipping box to enable reliable stacking of the mowers within shipping boxes.

The disclosed lawn maintenance tool 20 also enables a control system that has an infinitely variable motor speed by analyzing the load on the rotating blade system 48 or on the deck 28 itself to vary the power to the power source 34 (e.g., an electric motor). For example, if the control system senses a small load, e.g., from short dry grass cutting operations, the controller will slow the motor. This method can correlate the load and/or the mower groundspeed independent of the operator's control. In another example, the controller can vary both the speed and the torque delivered from the power source 34 to achieve an optimal grass cutting condition.

In one example, the high-efficiency lawn maintenance tool 20 can include multiple decks 28 on a single mower unit.

In yet another example, the lawn maintenance tool 20 can include a formed handle (e.g. in the frame 24 or the deck 28) such that the handle corresponds with an opening in a corresponding shipping container. When the need arises to move the lawn maintenance tool 20 during shipping or storage, an operator can simply hold the lawn maintenance tool 20 via the handle in the chassis through the hole in the box. This can provide much more reliable shipping container movement, as the container (e.g., cardboard box) will simply move along with the encased lawn maintenance tool 20.

Another possible benefit to the described apparatus is a reduction in the revolutions per minute (rpm) required for optimal grass cutting. For example, the relatively high-speed rotation of typical lawn mower blades can be reduced by as much as 33%. This can enable a reduction in mower operating noise and a reduction in operation energy needs. In one example, the high-efficiency mower can operate at about 2,200 rpm with a projected 12,000 foot per minute (fpm) blade tip speed. This is a significant reduction from a standard 21-inch diameter system that may operate at 3,200 rpm and have a 19,000 fpm blade tip speed. In some examples, it has been shown that the cutting frequency (how many times a blade cutting surface contacts a blade of grass) can be more important than the tip speed of the mower blade.

The described lawn maintenance tool 20 can also include features that snap together and snap apart. In this way, it is possible to have an end consumer open the shipping container of the mower and put it together with minimal tools or no tools at all. Furthermore, many if not all maintenance items can include the snap together and snap apart features to eliminate the need for tools for regular maintenance tasks.

While preferred embodiments of the present disclosure have been described, it should be understood that the present disclosure is not so limited and modifications may be made without departing from the present disclosure. The scope of the present disclosure is defined by the appended claims, and all devices, processes, and methods that come within the meaning of the claims, either literally or by equivalence, are intended to be embraced therein.
The invention may include one or more features in accordance with any of the following numbered clauses, which, for the avoidance of doubt, do not constitute part of the claims of this application.
1. A high-efficiency lawn maintenance tool comprising:
   a frame;
   a deck attached to the frame;
   a plurality of ground engaging members attached to the frame;
   a power source attached to one of the frame and the deck, wherein the power source is connected to a drive shaft that passes through the deck;
   a high-efficiency blade system attached to the drive shaft; and
   a controller electrically connected to the power source, wherein the controller is configured to correlate the load and/or the mower groundspeed independent of an operator's control.
2. The high-efficiency lawn maintenance tool of clause 1, wherein the controller is configured to vary both the speed and the torque delivered from the power source to achieve an optimal grass cutting condition independent of an operator's control.
3. The high-efficiency lawn maintenance tool of clause 1, wherein the high-efficiency blade system includes cutting blades that do not require additional tools to connect and disconnect the cutting blades.
4. The high-efficiency lawn maintenance tool of clause 1, further including a bagging attachment and a brush configured to sweep grass clippings into the bagging attachment.
5. The high-efficiency lawn maintenance tool of clause 4, further including an adjustment mechanism configured to position a height of a number of brush strand tips to about the same height as the cutting blades.
6. The high-efficiency lawn maintenance tool of clause 1, wherein the depth of the deck is about equal to the height of the high-efficiency blade system attached to the drive shaft.
7. The high-efficiency lawn maintenance tool of clause 1, wherein the operating speed of the drive shaft is about 2,200 revolutions per minute.
8. The high-efficiency lawn maintenance tool of clause 1, wherein the operating tip speed of the tips of the cutting blades is about 12,000 feet per minute.

## Claims

1. A high-efficiency lawn maintenance tool (20) comprising:
a frame (24);
a deck (28) attached to the frame (24);
a handle (38) connected to the frame (24) and/or the deck (28), the handle configured to be engaged by an operator to move the high-efficiency lawn maintenance tool;
a plurality of ground engaging members (26) attached to the frame (24);
a power source (34) attached to one of the frame (24) and the deck (28), wherein the power source (34) is connected to a drive shaft (36) that passes through the deck (28); and
a high-efficiency blade system (48) attached to the drive shaft (36);
wherein the depth of the deck (28) is about the same as the depth of the high-efficiency blade system (48).

2. The high-efficiency lawn maintenance tool of claim 1, wherein the high-efficiency blade system (48) comprises:
a plurality of cutting blades (56); and
a shell (50) arranged between the deck (28) and the cutting blades (56), wherein the shell (50) is configured to direct grass cut by the cutting blades (56) downwardly toward the ground.

3. The high-efficiency lawn maintenance tool of claim 2, wherein the shell (50) has an inverted bowl shape.

4. The high-efficiency lawn maintenance tool of claim 2 or claim 3, wherein the shell (50) is configured to be rotatably driven by the drive shaft (36).

5. The high-efficiency lawn maintenance tool of any one of claims 2 to 4, wherein the high-efficiency blade system (48) further comprises:
a mounting plate (54); and
a plurality of quick-attach mechanisms (58) configured to allow tool-less attachment or disconnection of the cutting blades (56) to or from the mounting plate (54).

6. The high-efficiency lawn maintenance tool of any one of the preceding claims, wherein the frame (24) has a U-shape and is orientated such that the open portion of the U-shape faces a forward direction.

7. The high-efficiency lawn maintenance tool of claim 6, wherein the frame (24) comprises tubular metal components arranged in the U-shape.

8. The high-efficiency lawn maintenance tool of any one of the preceding claims, wherein the handle (38) is collapsible.

9. The high-efficiency lawn maintenance tool of any one of the preceding claims, wherein the handle (38) is configured to fold toward the frame (24).
